# EUROPÄISCHE PATENTSCHRIFT

(11) **EP 0 558 136 B1**
(45) Veröffentlichungstag und Bekanntmachung des Hinweises auf die Patenterteilung: **27.05.1998**
(21) Anmeldenummer: 93200481.5
(22) Anmeldetag: 19.02.1993
(51) Int. Cl.: H04J 3/07

(54) **Übertragungssystem mit einer Schaltungsanordnung zum Ausgleich von Frequenz- und/oder Phasenschwankungen zwischen einem ankommenden und einem abgehenden Signal**
Transmission system with a circuit for correcting frequency and/or phase jitter between an incoming and an outgoing signal
Système de transmission équipé avec un circuit pour la correction de la gigue de fréquence et/ou phase entre un signal d'entrée et un signal de sortie

(30) Priorität: 27.02.1992 DE 4205959
(43) Veröffentlichungstag der Anmeldung: 01.09.1993
(73) Patentinhaber: LUCENT TECHNOLOGIES INC., Murray Hill, New Jersey 07974-0636 (US)
(72) Erfinder: Niegel, Michael, Dipl.-Ing., W-2000 Hamburg 1 (DE); Leuschner, Helmut, Dipl.-Ing., W-2000 Hamburg 1 (DE); Scheffel, Klaus, Dipl.-Ing., W-2000 Hamburg 1 (DE)
(74) Vertreter: Watts, Christopher Malcolm Kelway, Dr.

(56) Entgegenhaltungen:
- EP-A- 0 404 268
- FR-A- 2 450 008
- PATENT ABSTRACTS OF JAPAN vol. 9, no. 318 (E-366)13. Dezember 1985 & JP-A-60152 138

## Beschreibung

Die Erfindung bezieht sich auf eine Schaltungsanordnung zum Ausgleich von Frequenz- und/oder Phasenschwankungen zwischen einem ankommenden und einem abgehenden Daten und Datenlücken enthaltenden Signal gemäß dem Oberbegriff des Anspruchs 1. Eine derartige Schaltungsanordnung ist z.B. aus der FR-A-2 450 008 (= US 4,355,387) bekannt. Die Erfindung bezieht sich weiter auf ein Übertragungssystem mit einer solchen Schaltungsanordnung.

Aus der DE-A1-39 20 391 ist auch eine Anpassungsschaltung bekannt, bei der ein ankommendes Signal mit einer Bitrate von 140 Mbit/s an ein abgehendes STM-1-Signal mit einer Bitrate von 155 Mbit/s angepast wird. Das STM-1-Signal ist nach Rahmen strukturiert und weist außer den eigentlichen Daten des ankommenden Signals, Steuerinformationen und Stopfdaten auf, die als Datenlücken bezeichnet werden. Ein STM-1-Rahmen besteht aus 270 Spalten und 9 Zeilen (pro Zeile 270 Bytes). In den Zeilen 1 bis 9, jeweils in den Spalten 1 bis 9 ist der "Section Overhead" (SOH) für Steuerungs- und Fehlererkennungsinformationen und in dem restlichen Bereich (Nutzlastbereich = Payload) Daten des ankommenden Signals, Stopfdaten und weitere Steuerungsinformationen untergebracht. Das ankommende 140 Mbit/s-Signal wird dabei in einem virtuellen Container VC-4 untergebracht, dessen Struktur in der CCITT-Empfehlung G 709 näher erläutert ist.

Aus dem ankommenden Signal wird ein Schreibtaktsignal abgeleitet, mit welchem die Daten des ankommenden Signals in einen Puffer geschrieben werden. Zur Auslesung der Daten wird ein lokales Taktsignal oder Lesetaktsignal verwendet. Da das Schreibtaktsignal und das Lesetaktsignal in der Frequenz und/oder in der Phase voneinander abweichen, werden Stopfdaten in das abgehende Signal hineingepackt. Die Steuerung des Schreib- und Auslesevorganges übernimmt eine Puffersteuerschaltung, die mit dem Schreibtaktsignal und dem Lesetaktsignal betrieben wird. Die Puffersteuerschaltung führt also einerseits eine Synchronisierung des ankommenden Signals auf das Lesetaktsignal und andererseits Stopfvorgänge durch, indem sie Stopfdaten an vorgegebenen Stopfstellen einfügt.

Der Erfindung liegt die Aufgabe zugrunde, eine schaltungsanordnung und ein Übertragungssystem der eingangs genannten Art zu schaffen, die bzw. das auf einfache Weise eine Synchronisation zwischen ankommenden und abgehenden Signal durchführt.

Die Aufgabe wird bei einer Schaltungsanordnung der eingangs genannten Art gelöst durch die kennzeichnenden Merkmale des Anspruchs 1.

Die erfindungsgemäße Schaltungsanordnung enthält einen Vorpuffer und eine Steuerschaltung, welche eine Anpassung zweier digitaler Signale mit unterschiedlichen Frequenzen durchführt. In den Vorpuffer werden die Daten des Signals mit der Taktfrequenz eines Schreibtaktsignals geschrieben. Das Schreibtaktsignal ist dabei aus dem ankommenden Signal abgeleltet worden. Die Daten werden aus dem Vorpuffer mit der Taktfrequenz eines lokalen Taktsignales oder eines Lesetaktsignales ausgelesen. Es findet also eine Synchronisation der Daten auf das Lesetaktsignal statt.

Gesteuert wird der Schreib- und Lesevorgang des Vorpuffers von einer Steuerschaltung, die bei Erreichen eines bestimmten unteren Füllstandes des Vorpuffers positive Stopfdaten in das abgehende Signal einfügt. Unter einer positiven Stopfung ist das Auslassen einer Nutzinformation an einer solchen Stelle zu verstehen, die sonst eine Nutzinformation aufweist. Ein positiver Stopfvorgang ist erforderlich, wenn die Frequenz des Lesetaktsignals größer ist als die Frequenz des Schreibtaktsignals. Es kann auch der Fall eintreten, daß die Frequenz des Lesetaktsignals kleiner ist als die Frequenz des Schreibtaktsignals. In diesem Fall muß, bevor der Vorpuffer überläuft, ein negativer Stopfvorgang stattfinden. Bei einer negativen Stopfung wird an einer solchen Stelle Nutzinformation überragen, die sonst keine Nutzinformation trägt. Ein negativer Stopfvorgang kann nur während einer Datenlücke vorgenommen werden. Hierbei wird wenigstens in eine Datenlücke Daten eingefügt.

Die von dem Vorpuffer gelieferten Daten können einer Anpassungsschaltung zugeführt werden, die nicht mehr die Aufgabe hat, die Synchronistion der Daten auf die Lesefrequenz durchzuführen, sondern die zur Einfügung der vom Vorpuffer gelieferten Stopfdaten und gegebenenfalls weiterer Stopfdaten an den dazu vorgegebenen Stopfstellen dient. Solche Stopfstellen sind beispielsweise für STM-1-Signale mit unterschiedlichen Containern (z.B. VC-11 oder VC-3) aus der CCITT-Empfehlung G 709 zu entnehmen. Aufgrund der Synchronisation im Vorpuffer wird der Schaltungsaufwand in der Anpassungsschaltung gegenüber den bekannten Schaltungen verringert, da diese nur noch mit dem Lesetaktsignal und nicht zusätzlich mit dem Schreibtaktsignal betrieben wird (synchrone Anpassungsschaltung). Ein asynchroner Betrieb ist also nur in der einfach aufgebauten erfindungsgemäßen Schaltungsanordnung vorhanden, die nur die Anpassung zwischen Lesetakt und Schreibtakt durchführt.

Mit dem erfindungsgemäßen Übertragungssystem können Anpassungen zwischen einem ankommenden Signal mit einer Bitrate von 140 Mbit/s an ein abgehendes STM-1-Signal oder Anpassungen beispielsweise in einer Regeneratorschaltung durchgeführt werden, die ein STM-1-Signal empfängt und welche ein STM-1-Signal abgibt.

Die Steuerschaltung enthält einen Schreibadressengenerator, einen Leseadressengenerator, eine Subtraktionsschaltung und einen Vergleicher. Der Schreibadressengenerator dient mit jedem Schreibtakt zur Erzeugung von Schreibadressen und der Leseadressengenerator mit jedem Lesetakt zur Erzeugung von Leseadressen. Der Schreib- und der Leseadressengenerator sind zur Erzeugung von Adressen in einer zyklischen Reihenfolge vorgesehen. Die Subtraktionsschaltung dient zur Bildung eines Subtraktionswertes durch Subtraktion der Leseadresse von der Schreibadresse. Der Vergleicher ist nach Erreichen des Subtraktionswertes unter einen Schwellwert zur Sperrung des Leseadressengenerators für einen Lesetakt vorgesehen.

Der Schreibadressengenerator erzeugt bei jedem Schreibtakt eines Schreibtaktsignals eine neue Schreibadresse. Dabei wird von Schreibtakt zu Schreibtakt die Schreibadresse um eine vorgegebene Einheit verändert. Beispielsweise wird bei jedem Schreibtaht die Schreibadresse um die Zahl "1" erhöht. Der Schreibadressengenerator durchläuft bei der Erzeugung von Schreibadressen einen bestimmten Zyklus, so daß Schreibadressen wiederholt erzeugt werden. Die Anzahl der Schreibadressen eines Zyklus hängt von der Größe des Vorpuffers ab. Das gleiche gilt für den Leseadressengenerator, der bei jedem Lesetakt eines Lesetaktsignals eine neue Leseadresse bildet.

Die in der Steuerschaltung enthaltene Subtraktionsschaltung subtrahiert die Leseadresse von der Schreibadresse mit jedem Lesetakt und erzeugt einen Subtraktionswert. Dieser Subtraktionswert wird in einem Vergleicher mit einem Schwellwert verglichen. Ist der Subtraktionswert kleiner als der Schwellwert wird positiv gestopft. Die positive Stopfung wird durch eine Sperrung des Leseadressengenerators für einen Lesetakt erreicht, d.h. es wird für einen Lesetakt die Zuführung des Lesetaktsignals vom Leseadressengenerator unterbunden. Der Schwellwert entspricht dem unteren Füllstand des Vorpuffers.

Eine negative Stopfung kann nur dann vorgenommen werden, wenn das dem Vorpuffer gelieferte ankommende Signal eine Datenlücke aufweist. Bei einer Datenlücke wird der Schreibadressengenerator angehalten, d.h. die Lieferung des Schreibtaktsignals wird unterbrochen. In diesem Fall werden keine weiteren Daten im Vorpuffer gespeichert. Der Leseadressengenerator erzeugt jedoch weiterhin Leseadressen, wodurch Daten aus dem Vorpuffer ausgelesen werden. Ist der Schwellwert erreicht, wird der Leseadressengenerator ebenfalls angehalten. Diese Unterbrechung der Erzeugung von Leseadressen wird beendet, wenn wieder Daten in den Vorpuffer geschrieben werden und der Subtraktionswert mindestens den Schwellwert erreicht. Die Schreibunterbrechung in den Vorpuffer hat dabei mindestens einen Lesetakt länger gedauert als die Unterbrechung der Auslesung aus dem Vorpuffer. Diese Vorgehensweise bewirkt während einer Datenlücke eine negative Stopfung. Die Größe des Vorpuffers muß mindestens so ausgelegt werden, daß während zwei aufeinanderfolgender Datenlücken kein Überlauf des Vorpuffers vorkommt.

Die Schaltungsanordnung kann zur Verarbeitung von STM-1-Signalen dienen. In dem Vorpuffer werden dann Daten dieses STM-1-Signals gespeichert. Das STM-1-Signal enthält SOH-Daten (SOH = Section Overhead), die in den Zeilen 1 bis 9 jeweils in den Spalten 1 bis 3 und 5 bis 9 des STM-1-Rahmens untergebracht sind. In der Zeile 4 jeweils in den Spalten 1 bis 9 sind AU-Pointer abgelegt, die auf den Anfang einer Verwaltungseinheit AU-4 oder AU-3 hinweisen und Stopfdaten enthalten können. Die SOH-Daten beinhalten Steuerungs- und Fehlererkennungsinformationen. In den Vorpuffer werden nur Daten eingeschrieben, die außerhalb des SOH-Bereiches liegen. Daher enthält die Anpassungsschaltung einen Empfangs-Rahmenzähler, der bei SOH-Daten des STM-1-Signals mit Ausnahme der AU-Pointer zur Sperrung des Schreibadressengenerators vorgesehen ist. Wenn die SOH-Daten vorliegen wird also keine Schreibadresse im Schreibadressengenerator erzeugt. Während des Auftretens der SOH-Daten liegt also eine Datenlücke vor.

Der Empfangs-Rahmenzähler kann zusätzlich noch zur Erzeugung einer Au-Pointer-Kennung verwendet werden, wenn der Anfang des AU-Pointers erkannt wird. Diese AU-Pointer-Kennung kann in dem Vorpuffer zwischengespeichert werden und einer nachfolgenden Anpassungsschaltung zur Verfügung gestellt werden, die dadurch keinen Rahmenzähler benötigt.

Jede Verwaltungseinheit AU-3 und jeder dazugehörige AU-Pointer sind abwechselnd in den STM-1-Rahmen eingesetzt. Es sind folglich drei Bereiche vorhanden, die abwechselnd im STM-1-Rahmen auftauchen. Zur Kennzeichnung eines Bereiches kann der Empfangs-Rahmenzähler zusätzlich noch einen Bereichszähler enthalten, der jeweils einen Bereich angibt, und dessen Zählerinhalt auch im Vorpuffer zwischengespeichert und der nachfolgenden Anpassungsschaltung geliefert werden kann.

Die Schaltungsanordnung ist bei einer Sperrung des Leseadressengenerators noch zur Lieferung einer Stopfinformation vorgesehen. In diesem Fall liegt eine positive Stopfung - also keine Daten - vor. Eine angeschlossene Anpassungsschaltung kann diese Stopfinformation auswerten und Stopfdaten in die vorgegebenen Stellen in das Signal einfügen.

Es kann während des Betriebes der Schaltungsanordnung z.B. vorkommen, daß der Generator für das Lesetaktsignal defekt wird. Beispielsweise kann die Frequenz des Lesetaktsignals sehr viel größer sein als im Normalfall. In diesem Fall wird häufiger ein Datenunterlauf des Vorpuffers vorkommen. Zur Feststellung eines Vorpufferüberlaufes oder eines - unterlaufes enthält die Steuerschaltung ein Register und eine Fehlerauswerteschaltung. Das Register ist zur Zwischenspeicherung der vom Vergleicher zu liefernden Subtraktionswerte während eines Lesetaktes bestimmt und die Fehlerauswerteschaltung ist zur Ermittlung eines Vorpufferüberlaufes oder eines -unterlaufes aus dem vom Vergleicher zu liefernden Subtraktionswert und aus dem vom Register zu liefernden Subtraktionswert vorgesehen.

Für die Anpassung eines STM-1-Signales genügt ein Vorpuffer mit vier Speicherplätzen für Daten mit einer Länge von 1 Byte. Der Lese- und der Schreibadressengenerator können in diesem Fall als modulo-4-Zähler ausgebildet sein.

Ein Ausführungsbeispiel der Erfindung wird nachstehend anhand der Figuren näher erläutert. Es zeigen:
- Fig. 1: eine schematische Darstellung des STM-1-Rahmens mit einem VC-4-Container,
- Fig. 2: ein Übertragungssystem, in dem die Erfindung benutzt werden kann,
- Fig. 3: ein Ausführungsbeispiel einer erfindungsgemäßen Schaltungsanordnung zur Verwendung in einem Übertragungssystem nach Fig. 2.

Übertragungssysteme, die Signale der synchronen digitalen Hierachie übertragen, weisen z. B. Sende- und Empfangsschaltungen (Endgeräte) auf, in denen Schaltungsanordnungen Frequenz- und/oder Phasenschwankungen zwischen einem ankommenden und einem abgehenden Signal ausgleichen. Das ankommende Signal wird dabei an ein lokales Taktsignal oder Lesetaktsignal angepaßt. Mit einem solchen Übertagungssystem wird beispielsweise ein STM-1-Signal übertragen. Dieses STM-1-Signal ist nach Rahmen strukturiert und in der CCITT-Empfehlung G 709 näher erläutert. Im folgenden sollen die für die Erfindung wesentlichen Teile des STM-1-Rahmenaufbaues erläutert werden.

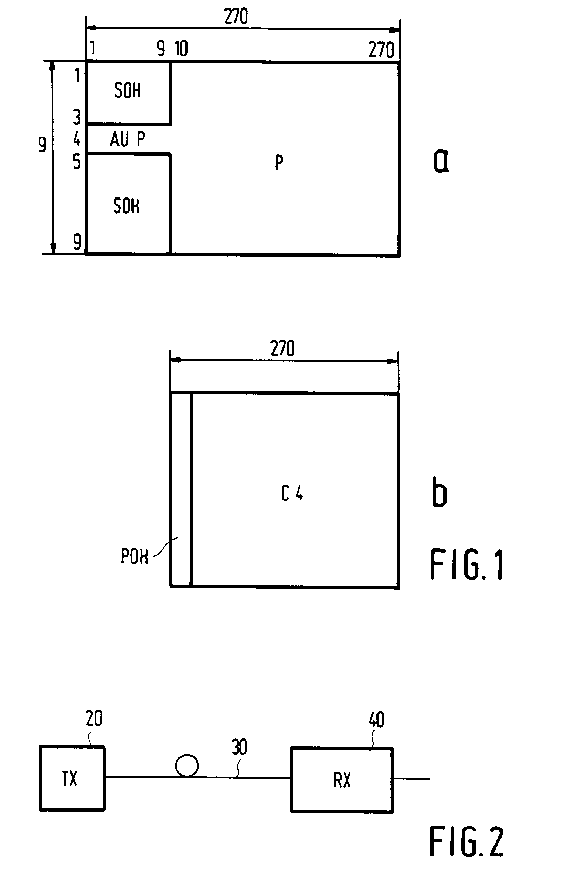

Die Struktur eines STM-1-Rahmens ist in Fig. la schematisch dargestellt. Der Rahmen besteht aus 270 Spalten und 9 Zeilen (pro Zeile 270 Bytes). In den Zeilen 1 bis 3 und 5 bis 9, jeweils in den Spalten 1 bis 9 ist der sogenannte "Section Overhead" (SOH) für Steuerungs- und Fehlererkennungsinformationen, in der vierten Zeile von Spalte 1 bis 9 ist eine Verwaltungseinheit, die als "AU-Pointer" (AU-P) bezeichnet wird, und in den restlichen Spalten und Zeilen die eigentliche Nutzinformation, die "STM-1-Payload" (P) untergebracht. Wie Fig. 1b zeigt, ist in der STM-1-Payload beispielsweise ein virtueller Container VC-4 (in einer Verwaltungseinheit AU-4) untergebracht, der aus einem Nutzinformationsbereich und einem Steuerungsbereich POH (Path Overhead) besteht. Es können beispielsweise auch drei Verwaltungseinheiten AU-3 im STM-1-Rahmen eingefügt sein. Unter einem Container wird hierbei die Grundverpakkungseinheit für Nutzsignale verstanden. In einem solchen Container können noch weitere Container untergebracht werden.

In Fig. 2 wird ein durch einen Sender 20 erzeugtes Signal über ein Übertragungssystem 30 zu einem Empfänger 40 übertragen. Im Empfänger 40 wird das Eingangssignal in ein Ausgangssignal umgesetzt. Das Eingangsssignal weist eine Eingangsbitrate und das Ausgangssignal eine Ausgangsbitrate auf, die größer oder kleiner als die Eingangsbitrate sein kann.

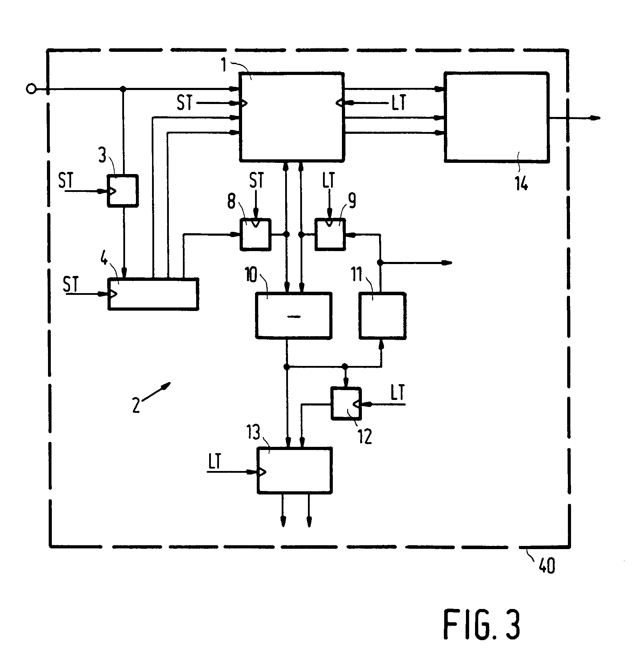

Ein Ausführungsbeispiel einer erfindungsgemäßen Schaltungsanordnung 40 zur Verwendung in einem System nach Fig. 2 wird im folgenden anhand der Fig. 3 erläutert. Die Schaltungsanordnung 40 enthält einen Vorpuffer 1, eine Steuerschaltung 2, eine Synchronisationsschaltung 3 und einen Empfangs-Rahmenzähler 4. Die Daten des ankommenden STM-1-Signals werden dem Vorpuffer 1 und der Synchronisationsschaltung 3 geliefert.

Die oben genannten Schaltelemente 1 bis 4 der Schaltungsanordnung können Teile einer anwendungsspezifischen integrierten Schaltung oder Prozessorelemente sein, die mittels spezieller Entwurfssprachen an einem Rechner entworfen werden. Die Funktion einer solchen Schaltung läßt sich daher einfacher über Zustands- oder Programmabläufe erläutern.

Die Synchronisationsschaltung 3 läßt sich durch folgenden Zustandsablauf beschreiben:
1. Ermittlung des Rahmenanfangs eines STM-1-Rahmens aus den ersten sechs Bytes (3*A1, 3*A2);
2. Erzeugung eines Setzsignals, wenn Rahmenanfang erkannt;
3. Zuführung des Setzsignals zu dem Empfangs-Rahmenzähler 4.

Im STM-1-Rahmen sind die ersten sechs Bytes in der ersten Zeile zur Kennzeichnung des Rahmenanfangs bestimmt. Die ersten drei Bytes werden mit dem Zeichen A1 und die Bytes 4 bis 6 mit dem Zeichen A2 gekennzeichnet. Hat die Synchronisationsschaltung 3 diese Bytes ermittelt, ist der Rahmenanfang des STM-1-Rahmens gefunden. Dann wird ein Setzsignal erzeugt, daß dem Empfangs-Rahmenzähler 4 zugeführt wird. Die Synchronisationsschaltung 3 erhält noch ein Schreibtaktsignal ST, welches von einem hier nicht dargestellten Schaltungselement erzeugt wird, welches das Schreibtaktsignal aus dem Datenstrom des STM-1-Signals gewonnen hat.

Der Empfangs-Rahmenzähler 4, der ebenfalls das Schreibtaktsignal ST erhält, läßt sich durch folgenden Zustandsablauf erläutern:
1. Bei dem Setzsignal von der Synchronisationsschaltung 3 wird der Zählerinhalt eines Hauptzählers auf einen Startwert gesetzt;
2. Erhöhung des Zählerinhaltes des Hauptzählers bei jedem Schreibtakt;
3. Sperrung eines Freigabesignals bei SOH-Daten;
4. Erzeugung einer AU-Pointer-Kennung, wenn Anfang des AU-Pointers erkannt;
5. Ein Bereichszähler (modulo-3-Zähler) wird bei Erhalt des Setzsignals von der Synchronisationsschaltung 3 auf einen Startwert gesetzt;
6. Erhöhung des Zählerinhalts (Bereichskennung) des Bereichszählers mit jedem Schreibtakt.

Nach Empfang eines Setzsignales von der Synchronisationsschaltung 3 wird der Zählerinhalt eines Hauptzählers auf einen Startwert gesetzt. Mit jedem Schreibtakt wird im folgenden der Zählerinhalt des Hauptzählers um eine Einheit erhöht. Dieser Zählerinhalt gibt die Nummer eines Bytes in STM-1-Rahmen an. Von dem Empfangs-Rahmenzähler 4 wird nur dann ein Freigabesignal für die Steuerschaltung 2 erzeugt, wenn keine SOH-Daten vorhanden sind. Sonst ist das Freigabesignal gesperrt. Des weiteren erzeugt der Empfangs-Rahmenzähler 4 eine AU-Pointer-Kennung wenn der Anfang des AU-Pointers (Zeile 4, Spalten 1 bis 9) erkannt ist. Diese AU-Pointer-Kennung wird dem Vorpuffer 1 zugeführt.

Jede Verwaltungseinheit AU-3 und jeder dazugehörige AU-Pointer sind abwechselnd in den STM-1-Rahmen eingesetzt. Es sind folglich drei Bereiche vorhanden, die abwechselnd im STM-1-Rahmen auftauchen. Zur Kennzeichnung eines Bereiches ist ein Bereichszähler in dem Empfangs-Rahmenzähler 4 vorhanden, der ein modulo-3-Zähler ist, und der bei Erhalt des Setzsignales von der Synchronisationsschaltung 3 auf einen Startwert gesetzt wird. Mit jedem Schreibtakt wird der Zählerinhalt des Bereichszählers erhöht. Dem Vorpuffer 1 wird ebenfalls der Zählerinhalt des Bereichszählers zugeführt. Diese Daten werden im Vorpuffer 1 zwischengespeichert und können in einer nachgeordneten Anpassungsschaltung 14 verwendet werden.

Die Steuerschaltung 2 enthält einen Schreibadressengenerator 8, einen Leseadressengenerator 9, eine Subtraktionsschaltung 10, einen Vergleicher 11, ein Register 12 und eine Fehlerauswerteschaltung 13. Der Schreibadressengenerator 8 und der Leseadressengenerator 9 enthalten jeweils modulo-4-Zähler, die jeweils ab dem Zählerinhalt Null zählen. Dem Schreibadressengenerator 8 wird noch das Schreibtaktsignal und dem Leseadressengenerator 9 das Lesetaktsignal zugeführt. Mit jedem Schreibtakt bzw. Lesetakt wird der Inhalt des Schreibadressengenerators 8 bzw. Leseadressengenerators 9 um eine Einheit erhöht. Die Schreibadressen von dem Schreibadressengenerator 8 und die Leseadressen von dem Leseadressengenerator 9 werden dem Vorpuffer 1 und der Subtraktionsschaltung 10 zugeführt. Dem Vorpuffer 1 werden noch für den Schreibvorgang das Schreibtaktsignal und für den Lesevorgang das Lesetaktsignal geliefert. Mit jedem Schreibtakt werden die Daten des STM-1-Signals, die AU-Pointer-Kennung und die Bereichskennung in den Vorpuffer geschrieben, wenn eine Schreibadresse anliegt. Eine Schreibadresse wird von dem Schreibadressengenerator 8 nur dann erzeugt, wenn die Erzeugung durch das von dem Empfangs-Rahmenzähler 4 erzeugte Freigabesignal vorgegeben ist. Aus dem Vorpuffer 1 werden die Daten, die AU-Pointer-Kennung und die Bereichskennung ausgelesen, wenn ein Lesetakt und eine Leseadresse anliegt. Der Vorpuffer 1 ist jeweils so ausgelegt, daß er vier Speicherplätze für Daten, vier Speicherplätze für die AU-Pointer-Kennung und vier Speicherplätze für die Bereichskennung enthält.

Die Subtraktionsschaltung 10 subtrahiert die Leseadresse von der Schreibadresse und bildet einen Subtraktionswert, der dem Vergleicher 11 zugeführt wird. Der Vergleicher 11 erzeugt ein Freigabesignal für den Leseadressengenerator 9, das gesperrt wird, wenn der Subtraktionswert einen Schwellwert erreicht oder unterschreitet. Dieser Schwellwert beträgt beim Ausführungsbeispiel "1". Wird das Freigabesignal, das dem Leseadressengenerator 9 zugeführt wird, gesperrt, erzeugt der Leseadressengenerator 9 keine Leseadresse. Durch die Sperrung des Leseadressengenerators 9 werden während eines Lesetaktes keine Daten aus dem Vorpuffer 1 ausgelesen. Dies entspricht einem positiven Stopfvorgang.

Ein negativer Stopfvorgang kann nur während des Auftretens von SOH-Daten durchgeführt werden. Während des Auftretens der SOH-Daten wird der Schreibadressengenerator 8 von dem Empfangs-Rahmenzähler 4 gesperrt. Der Schreibadressengenerator 8 wird nicht während des Auftretens der AU-Pointer (Zeile 4, Spalten 1 bis 9) gesperrt. Dadurch werden keine Daten mehr in den Vorpuffer 1 geschrieben, und es erfolgt ein Entleeren des Vorpuffers. Durch das Entleeren des Vorpuffers 1 wird der Schwellwert erreicht und daraufhin ein Sperrsignal von dem Vergleicher 11 erzeugt und der Leseadressengenerators 9 angehalten. Nach dem Ende der SOH-Daten wird der Schreibadressengenerator 8 über das Freigabesignal vom Empfangs-Rahmenzähler 4 freigegeben. Der Vorpuffer 1 kann sich im folgenden mit Daten auffüllen. Stellt der Vergleicher 11 fest, daß der Schwellwert überschritten ist, gibt dieser den Leseadressengenerator frei.

Der Vorpuffer 1 kann nur eine bestimmte Anzahl von Daten aufnehmen. Wenn die Daten schneller eingeschrieben als ausgelesen werden (Schreibtaktsignal hat höhere Frequenz als Lesetaktsignal), wird, wenn der Schreibadressengenerator nicht angehalten wird, ein überlauf des Vorpuffers 1 erfolgen. Da der Schreibadressengenerator 8 nur während des Auftretens der SOH-Daten angehalten werden kann, muß der Vorpuffer so dimensioniert werden, daß bei den zulässigen Frequenzschwankungen zwischen Lesetakt- und Schreibtaktsignal kein Überlauf stattfinden kann. Ein negativer Stopfvorgang kann also erst während des Auftretens einer Datenlücke (während des Auftretens der SOH-Daten) vorgenommen werden. Im Gegensatz dazu kann ein positiver Stopfvorgang (Frequenz des Schreibtaktsignals ist kleiner als Frequenz des Lesetaktsignals) während des Auftretens der Daten vorgenommen werden.

Bei einem negativen Stopfvorgang wird während neun Schreibtakten ein Schreiben des Vorpuffers 1 verhindert und während acht Takten ein Auslesen des Vorpuffers 1 verhindert. Es wird also einmal mehr ausgelesen als im Normalfall.

Das Lesetaktsignal wird von einem in der Regeneratorschaltung befindlichen lokalen Oszillator erzeugt. Bei einem Defekt dieses Oszillators kann beispielsweise das Lesetaktsignal eine wesentlich andere Frequenz aufweisen, so daß ein Datenverlust eintreten kann. Dies geschieht beispielsweise bei einem Über- oder Unterlauf des Vorpuffers 1. Um einen solchen Über- bzw. Unterlauf feststellen zu können, ist das Register 12 und die Fehlerauswerteschaltung 13 vorgesehen. Im Register 12 wird der Subtraktionswert während eines Lesetaktes gespeichert. Die Fehlerauswerteschaltung 13 empfängt den aktuellen Subtraktionswert und den um einen Lesetakt verzögerten Subtraktionswert vom Register 12. In der Fehlerauswerteschaltung 13 werden diese Signale mittels einer Vergleichsschaltung miteinander verglichen. Überschreiten die Signale bestimmte Schwellwerte, wird ein Vorpufferunter- bzw. -überlauf festgestellt und ausgegeben. Die beiden Schaltelemente 12 und 13 erhalten noch das Lesetaktsignal LT.

## Patentansprüche

1. Schaltungsanordnung zum Ausgleich von Frequenzund/oder Phasenschwankungen zwischen einem ankommenden und einem abgehenden, Daten und Datenlucken enthaltenden Signal, mit einem Hauptpuffer (14) und mit einem Vorpuffer (1) zur Zwischenspeicherung der Daten des ankommenden Signals, und mit einer Steuerschaltung (2), die bei Erreichen eines vorgegebenen unteren Füllstandes des Vorpuffers (1) zur Einfügung von positiven Stopfdaten in das vom Vorpuffer (1) abgehende Signal und zur Lieferung von Stopfinformationen vorgesehen ist,
dadurch gekennzeichnet
daß die Steuerschaltung (2) einen Schreibadressengenerator (8), einen Leseadressengenerator (9), eine Subtraktionsschaltung (10) und einen Vergleicher (11) enthält
daß die Subtraktionsschaltung (10) zur Bildung eines Subtraktionswertes durch Subtraktion einer Leseadresse von einer Schreibadresse dient und
daß der Vergleicher (11) nach Erreichen des Subtraktion wertes unter einen Schwellwert zur Sperrung des Leseadressengenerators (9) für einen Lesetakt vorgesehen ist.

2. Schaltungsanordnung nach Anspruch 1,
dadurch gekennzeichnet,
daß der Schreibadressengenerator (8) mit jedem Schreibtakt zur Erzeugung von Schreibadressen und der Leseadressengenerator (9) mit jedem Lesetakt zur Erzeugung von Leseadressen dient und
daß der Schreib- und der Leseadressengenerator (8, 9) zur Erzeugung von Adressen in einer zyklischen Reihenfolge vorgesehen sind.

3. Schaltungsanordnung nach Anspruch 1 oder 2,
dadurch gekennzeichnet,
daß der Vorpuffer (1) zur Zuführung von Daten eines STM-1-Signals dient und
daß ein Empfangs-Rahmenzähler (4) bei SOH-Daten des STM-1-Signals mit Ausnahme der AU-Pointer zur Sperrung des Schreibadressengenerators (8) vorgesehen ist.

4. Schaltungsanordnung nach einem der Ansprüche 1 bis 3,
dadurch gekennzeichnet,
daß bei einer Sperrung des Leseadressengenerators (9) der Vergleicher (11) zur Lieferung einer Stopfinformation vorgesehen ist.

5. Schaltungsanordnung nach einem der Ansprüche 1 bis 4,
dadurch gekennzeichnet,
daß ein Register (12) zur Zwischenspeicherung der vom Vergleicher (11) zu liefernden Substraktionswerte während eines Lesetaktes bestimmt ist und
daß eine Fehlerauswerteschaltung (13) zur Ermittlung eines Vorpufferüberlaufes oder eines -unterlaufes aus den vom Vergleicher (11) zu liefernden Substraktionswert und aus dem vom Register (12) zu liefernden Substraktionswert vorgesehen ist.

6. Schaltungsanordnung nach einem der Ansprüche 1 bis 5,
dadurch gekennzeichnet,
das der Vorpuffer (1) vier Speicherplatze für Daten mit einer Länge von einem Byte enthält und
daß der Lese- und der Schreibadressengeneraror (8, 9) als modulo-4-Zähler ausgebildet sind.

7. Übertragungssystem mit einer Schaltungsanordnung nach einem der Ansprüche 1 bis 6.

## Claims

1. Circuit arrangement for compensating for frequency fluctuations and/or phase jitter between an incoming and an outgoing signal containing data and data gaps, having a main buffer (14) and having a preliminary buffer (1) for buffer-storing the data of the incoming signal, and having a control circuit (2) which, once the occupancy of the preliminary buffer (1) has reached a predetermined lower occupancy, is provided for inserting positive stuffing data into the signal leaving the preliminary buffer (1) and for supplying stuffing information items,
characterized
in that the control circuit (2) contains a write address generator (8), a read address generator (9), a subtraction circuit (10) and a comparator (11),
in that the subtraction circuit (10) serves to form a subtraction value by subtracting a read address from a write address, and
in that the comparator (11), after the subtraction value has reached a value below a threshold value, is provided for inhibiting the read address generator (9) for one reading clock pulse.

2. Circuit arrangement according to Claim 1,
characterized
in that the write address generator (8) serves to generate write addresses with each writing clock pulse and the read address generator (9) serves to generate read addresses with each reading clock pulse, and
in that the write and read address generators (8, 9) are provided for generating addresses in a cyclic sequence.

3. Circuit arrangement according to Claim 1 or 2,
characterized
in that the preliminary buffer (1) serves for feeding in data of an STM-1 signal, and
in that a reception frame counter (4) is provided for inhibiting the write address generator (8) in the event of SOH data of the STM-1 signal, with the exception of the AU pointers.

4. Circuit arrangement according to one of Claims 1 to 3,
characterized
in that in the event of the read address generator (9) being inhibited, the comparator (11) is provided for supplying a stuffing information item.

5. Circuit arrangement according to one of Claims 1 to 4,
characterized
in that a register (12) is intended to buffer-store the subtraction values, which are to be supplied by the comparator (11), during a reading clock pulse; and
in that an error evaluation circuit (13) is provided for determining a preliminary buffer overflow or underflow from the subtraction value to be supplied by the comparator (11) and from the subtraction value to be supplied by the register (12).

6. Circuit arrangement according to one of Claims 1 to 5,
characterized
in that the preliminary buffer (1) contains four storage locations for data with a length of one byte, and
in that the read and write address generators (8, 9) are designed as modulo-4 counters.

7. Transmission system having a circuit arrangement according to one of Claims 1 to 6.

## Revendications

1. Circuit pour la correction de la gigue de fréquence et/ou de phase entre un signal d'entrée et un signal de sortie, contenant des données et des intervalles entre données, comportant une mémoire principale (14) et une prémémoire tampon (1) pour la mémorisation intermédiaire des données du signal d'entrée, et comportant un circuit de commande (2) qui, lorsqu'est atteint un niveau bas de remplissage prescrit de la prémémoire tampon (1), est prévu pour insérer des données de justification positive dans le signal sortant de la prémémoire tampon (1) et pour fournir des informations concernant la justification,
caractérisé par le fait
que le circuit de commande (2) contient un générateur d'adresses d'écriture (8), un générateur d'adresses de lecture (9), un circuit de soustraction (10) et un comparateur (11), que le circuit de soustraction (10) sert à former une valeur de seuil en soustrayant de l'adresse d'écriture une adresse de lecture et
qu'une fois atteinte une valeur de soustraction inférieure à une valeur de seuil, le comparateur (11) est prévu pour verrouiller le générateur d'adresses de lecture (9) pendant un signal d'horloge de lecture.

2. Circuit selon la revendication 1,
caractérisé par le fait
qu'à chaque signal d'horloge d'écriture, le générateur d'adresses d'écriture (8) sert à produire des adresses d'écriture et qu'à chaque signal d'horloge de lecture le générateur d'adresses de lecture (9) sert à produire des adresses de lecture et
que le générateur d'adresses d'écriture et le générateur d'adresses de lecture (8, 9) sont prévus pour produire des adresses selon une succession cyclique.

3. Circuit selon la revendication 1 ou 2,
caractérisé par le fait
que la prémémoire tampon (1) sert à amener des données d'un signal STM-1 et
que, lors de l'apparition de données SOH/en-tête de section du signal STM-1, à l'exception du pointeur AU, un compteur de cadres de réception (4) est prévu pour verrouiller le générateur d'adresses d'écriture (8).

4. Circuit selon l'une des revendications 1 à 3,
caractérisé par le fait
qu'en cas de verrouillage du générateur d'adresses de lecture (9), le comparateur (11) est prévu pour fournir une information concernant la justification.

5. Circuit selon l'une des revendications 1 à 4,
caractérisé par le fait
qu'un registre (12) est prévu pour la mémorisation intermédiaire des valeurs de soustraction à fournir par le comparateur (11) pendant un signal d'horloge de lecture et
qu'un circuit de traitement des erreurs (13) est prévu pour déterminer un débordement ou un sous-dépassement de la prémémoire tampon à partir de la valeur de soustraction à fournir par le comparateur (11) et à partir de la valeur de soustraction à fournir par le registre (12).

6. Circuit selon l'une des revendications 1 à 5,
caractérisé par le fait
que la prémémoire tampon (1) contient quatre positions de mémoire pour des données d'une longueur d'un multiplet et
que le générateur d'adresses de lecture et le générateur d'adresses d'écriture (8, 9) sont conçus sous forme de compteur modulo-4.

7. Système de transmission comportant un circuit selon l'une des revendications 1 à 6.
